# EUROPEAN PATENT SPECIFICATION

(11) **EP 0 548 491 B1**
(45) Date of publication and mention of the grant of the patent: **28.08.1996**
(21) Application number: 92117935.4
(22) Date of filing: 20.10.1992
(51) Int. Cl.: B03B 9/06

(54) **Method of regenerating aggregate from construction waste**
Verfahren zur Regenerierung von Aggregat aus Bauschutt
Procédé pour la régénération d'agrégat de gravats

(30) Priority: 25.12.1991 JP 356553/91
(43) Date of publication of application: 30.06.1993
(73) Proprietor: KYOEI BUSSAN KABUSHIKI KAISHI, Kurita-gun, Shiga (JP)
(72) Inventor: Im, Young-Il, Kurita-gun, Shiga (JP); Lim, Kang-Haeng, Kurita-gun, Shiga (JP)
(74) Representative: TER MEER - MÜLLER - STEINMEISTER & PARTNER

(56) References cited:
- US-A- 4 895 311
- STICHTING C.R.O.W., WERKGROEP A1 "BOUW- EN SLOOPAFVAL": 'Resten zijn geen afval (meer) - Puingranulaten'; Publikatie 12, ISBN 90-6628-072-7, pages 1-24 October 1988 , STICHTING C.R.O.W. , EDE NL
- AUFBEREITUNGS TECHNIK. vol. 32, no. 3, March 1991, WIESBADEN DE pages 153 - 155 'Neue Bauschutt Recyclinganlage in Breisach'
- DATABASE WPI Week 7604, 1976 Derwent Publications Ltd., London, GB; AN 76-A7967X/04
- AUFBEREITUNGS TECHNIK, VOL. 32, NO. 6, JUNE 91, WIESBADEN DE, pages 317-319 "Aus dem Wall der Trennung werden Strassen der Verbindung - Recycling der Berliner Mauer" - whole document
- AUFBEREITUNGS TECHNIK. vol. 32, no. 6, June 1991, WIESBADEN DE pages 317 - 319 'Aus dem Wall der Trennung werden Strassen der Verbindung - Recycling der Berliner Mauer'

## Description

The present invention relates to method as claimed in claim 1, and especially to a method of regenerating crushed stones having high quality as aggregate from concrete blocks.

In the past, concrete blocks which form most of the construction waste were recycled as roadbed material or refilling material by crushing into sizes about 50mm. But the usage was strict in this way and not enough amount of waste was recycled. The waste which had no usage were disposed of as scrapped material, and this has caused problems from the point of industrial waste matters.

From STICHTING C.R.O.W., WERKGROEP A1 "BOUW- EN SLOOPAFVAL":
"Resten zijn geen afval (meer) - Puingranulaten"; Publikatie 12, ISBN 90-6628-072-7, pages 1-24
October 1988. STICHTING C.R.O.W., EDE NL
*page 16, line 48 - page 20, line 48; figures 5-9 *,
a method of regenerating aggregate from construction waste by crushing construction waste is already known comprising the following steps:
- a first crushing step were concrete blocks are crushed by compression;
- a second crushing step were first crushed concrete blocks gained by the first crushing step are crushed by grinding under high density and high pressure; and
- a third step where reprocessing aggregate mixture gained by the second crushing step is screened. Said method further uses a crusher in the second crushing step which comprises a fixed upper liner and a rotative lower liner, the lower liner being pushed up.

From AUFBEREITUNGS TECHNIK, vol. 32, no. 3, March 1991. WIESBADEN DE pages 153 - 155 "Neue Bauschutt - Recyclinganlage in Breisach" *page 153, middle column, line 1 - page 154, left column, line 22 * figure on page 153*, it is already known to throw abrasive obtained at the output of the crusher used in the second crushing step again into said crusher.

Further, it is already known from DATABASE WPI, Week 7604, 1976 Derwent Publications LTd., London, GB; AN 76-A7967X/04
& SU-A-289 667 (UKR TYAZHPROMAVTOMA ET AL)
8 July 1975
*abstract*, to use a three - stage crushing process regulation equipment for crushing and sorting works. The equipment includes an asynchronous motordrive for crusher jaw, electromagentic amplifier, regulatable hydraulic devices to change unloading openings of conical crushers of the second and third stages, and so on. Controlling of the hydraulic device for increasing the opening of the crusher of the second crushing stage is possible as well.

It is an object of the present invention to provide a method to gain crushed stones from concrete blocks with higher quality. The solution is contained in claim 1.

Compared to the crushed stones included in concrete blocks of construction waste having a compression strength of more than 1 ton/cm², the cement paste (mortar) included in concrete blocks have a compression strength of less than only 500kg/cm² in maximum.

The present invention provides a method to separate the cement paste from the crushed stones by utilizing the difference in compression strength between each material of the concrete blocks.

The separating method used in the regenerating method of the present invention comprises of a first step where concrete blocks are crushed to a particle size of about 50mm by a first jaw crusher, and a second step where the concrete blocks are thrown into the second crusher to remove mortar from aggregate by crushing for a long time under high density and adding pressure.

As the second crusher, a crusher which produces equal sized pieces of crushed sand by the pivoting of a lower liner when material particles are thrown into the space between a static upper liner and a pivoting lower liner, is used.

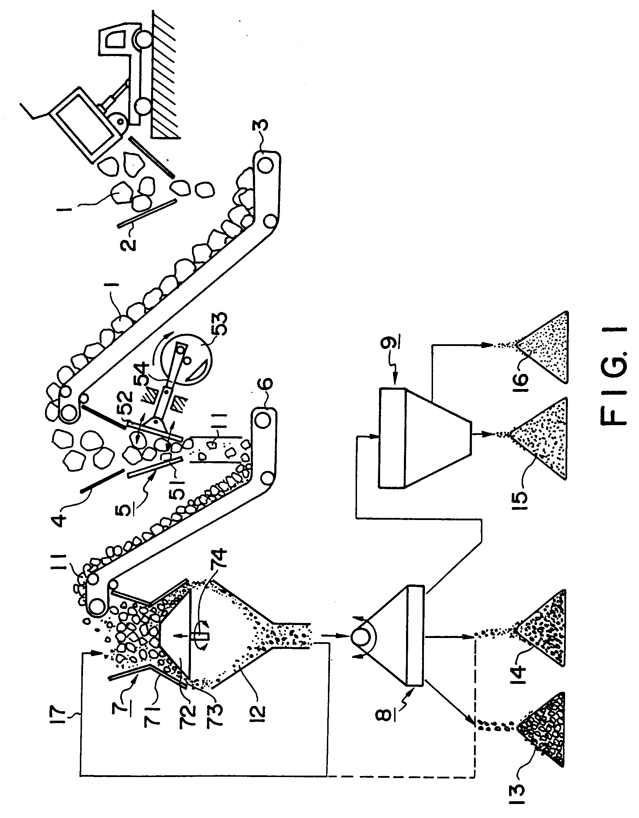

Fig. 1 is a schematic view showing the process of the regenerating method of construction waste material of the present invention.

The present invention is explained referring to the drawing.

Concrete blocks 1 produced as waste material at places such as construction sites are first thrown into a hopper 2 and then carried to the upper part of a primary crusher 5 by a belt conveyer 3, and thrown into a hopper 4 of the primary crusher.

Primary crusher 5 is comprised of a static plate 51 and a movable plate 52, the movable plate is connected to a rotating body 53 by a link structure 54 and being moved back and forth towards the static plate 51. As compression crusher 5 a jaw crusher is used.

Primary crushed concrete blocks 11 which went through the primary crusher 5 are crushed into blocks having a particle diameter of less than 50mm.

Then, the primary crushed concrete blocks 11 are carried to the upper part of a secondary crusher 4 by a belt conveyer 6, and thrown into said secondary crusher 7, to perform a secondary crush which separates the crushed stones from the mortar.

A stable secondary crush could be done by checking the amount of material inside the crusher 7 by a level meter etc. and performing a choke feed operation by making the amount of material thrown into the crusher 7 and the amount of products ejected from the crusher 7 equal, and having a fixed amount of material stay inside the crusher 7.

Secondary crusher 7 is comprised of a static upper liner 71 and a lower liner 72 pivoting by a rotation axis 74. The space between upper liner 71 and lower liner 72 is formed to become smaller towards an outlet 73, and a crusher sand made into equal pieces by the pivoting of the lower liner 72 is produced.

The width of the outlet 73 could be set into any desired size, and it is preferred to be 5~30mm. The residence time of the material inside the secondary crusher 7 could be controlled by adjusting the width of the outlet 73.

The rotation axis of the crusher 7 will produce a pressure in the upper direction of approximately 120~130kg/cm². The bigger the pressure added, the better the mortar component on the material will separate.

Inside the secondary crusher 7, the particles of the primary crushed concrete blocks 11 will be rubbed against each other, and the mortar stuck to the crushed stones with a small compression strength will be removed from said stones by the friction of the particles, thus the stones and the mortar are separated and ejected from the outlet 73 as a regenerative aggregate 12.

For complete separation at the secondary crusher 7, it is necessary that the concrete blocks stay inside the crusher 7 for a long time. When material is thrown into an ordinary cone crusher, it takes about 1~3 seconds for the material to pass, but when the secondary crusher 7 having a dam near the outlet 73 of lower liner 72 is used, it takes about 3~10 seconds for the material to pass, thus making residence time longer. That is, by providing a dam near the outlet, the angle of the outlet will be sufficiently smaller than the materials angle of rest, making it difficult for the material to pass through the crusher 7, thus making residence time longer.

Further, by providing a plural number of crushers as the secondary crusher 7 and by using them in many stages, the aggregate and the mortar could be separated more completely. When doing so, by differing the working condition of each crusher according to the size of the particles etc., the mortar could be separated more completely without crushing the stones into a size smaller than desired, and a regenerative aggregate of fine quality could be gained.

A part of a reprocessing aggregate 12 could be returned into the secondary crusher 7 as an abrasive 17. By putting in an abrasive, the separation of the mortar from the aggregate could be done more completely, By using a crushed stones with the particle size of 2.5~5mm as the abrasive, the mortar could be removed efficiently without crushing the stones.

A mixture of the separated aggregate 12 coming out of the secondary crusher 7 is screened by a screen 8 and divided into groups according to size. The groups are a middle sized aggregate 13 comprised of a ballast with a particle size of 15~20mm, a small sized aggregate 14 comprised of a ballast with a particle size of 5~15mm, and a fine aggregate with a particle size of under 5mm. The fine aggregate with a particle size of under 5mm is separated again by an air separator 9 into a fine aggregate 15 comprised of sand etc. with a particle size of 0.13~5mm and a particulate 16 comprised of mortar etc. with a particle size of under 0.13mm.

In the present invention, a crushing method of grinding is used for the secondary crush, so by the secondary crush a mortar with small strength will be crushed or separated, and the mortar could be separated completely from the stones without crushing the crushed stone having large strength.

Further, by the secondary crushing steps in the presen invention, the residence time of the crushing particles inside the crusher could be adjusted freely, so after crushing the concrete blocks thoroughly, the mortar could be separated from the stones.

Also, a grinding method is taken as the secondary crush so that flat crushed stones can be reduced, and a fine quality aggregate with regulated shape can be regenerated. In the same way, a fine aggregate comprised of stone powder and cement paste with only a small amount of flat components can be gained as regenerative fine aggregate.

Also, particulates comprised of stone powder and cement paste with only a small amount of flat components could be gained.

Of each regenerative aggregate, the crushed stones can be used effectively for general engineering works and construction works which mainly produce fresh concrete and asphalt mixture, So there is large usage, and enough recycle usage even if all of construction waste material is regenerated, so there is no need to think about the disposal of waste material.

Fine aggregate could also be used as mentioned above, or fine aggregate together with particles including unreacted mortar could be used as soil reforming material, In this way, every resource included in a concrete block could be used effectively.

## Claims

1. Method of regenerating crushed stones from concrete blocks of construction waste comprising the following steps:
- a first crushing step where concrete blocks (1) containing said crushed stones are crushed by a jaw crusher (5);
- a second crushing step where the crushed concrete blocks (11) gained by the first crushing step are crushed by a grinding crasher (7) comprising a fixed upper liner (71) and a lower liner (72), the lower liner (72) being pushed up, the residence time of the crushed concrete blocks (11) within said grinding crusher (7) is adjusted such that mortar sticking on the crushed stones can be separated completely therefrom without crushing said crushed stones into a size smaller than desired; and
- a third step where the mixture gained by the second crushing step is screened.

2. The method as claimed in claim 1, wherein abrasive (17) gained from the second crushing step is thrown into the grinding crusher (7) at the second crushing step.

3. The method as claimed in claim 1 or 2, wherein the residence time of crushed particles in the grinding crusher (7) is adjusted by adjusting the width of the outlet (73) of the grinding crusher (7).

4. The method as claimed in any one of claim 1 to 3, wherein the grinding crusher (7) used in the second crushing step comprises of a plural number of grinding crushers for crushing through many stages.

## Patentansprüche

1. Verfahren zur Regenerierung zerkleinerter Steine aus Betonblöcken von Bauschutt, mit folgenden Schritten:
- einen ersten Zerkleinerungsschritt, in welchem die zerkleinerten Steine enthaltenen Betonblöcke (1) durch einen Backenbrecher (5) zerkleinert werden;
- einen zweiten Zerkleinerungsschritt, in welchem die durch den ersten Zerkleinerungsschritt erhaltenen, zerkleinerten Betonblöcke (11) durch einen Mahlbrecher (7) zerkleinert werden, welcher eine feste obere Führung (71) und eine untere Führung (72) aufweist, wobei die untere Führung (72) nach oben gedrückt wird, um die Verweilzeit der zerkleinerten Betonblöcke (11) innerhalb des Mahlbrechers (7) so einzustellen, daß an den zerkleinerten Steinen haftender Mörtel vollständig von diesen getrennt wird, ohne die zerkleinerten Steine auf eine Größe kleiner als eine gewünschte zu zerkleinern; und
- einen dritten Schritt zum Sieben der durch den zweiten Zerkleinerungsschritt erhaltenen Mischung.

2. Verfahren nach Anspruch 1, **dadurch gekennzeichnet,** daß gemahlenes Material (17), welches im zweiten Zerkleinerungsschritt erhalten wird, in den Mahlbrecher (7) des zweiten Zerkleinerungsschritts zurückgeführt wird.

3. Verfahren nach Anspruch 1 oder 2, **dadurch gekennzeichnet,** daß die Verweilzeit von zerkleinerten Partikeln im Mahlbrecher (7) durch Einstellung der Weite des Auslasses (73) des Mahlbrechers (7) eingestellt wird.

4. Verfahren nach einem der Ansprüche 1 bis 3, **dadurch gekennzeichnet,** daß der im zweiten Zerkleinerungsschritt verwendete Mahlbrecher (7) eine Mehrzahl von Mahlbrechern für die Zerkleinerung über mehrere Stufen aufweist.

## Revendications

1. Procédé pour régénérer des pierres concassées provenant de blocs de béton de déblais provenant de bâtiments, comprenant les étapes suivantes:
- une première étape de concassage au cours de laquelle les blocs de béton (1) contenant lesdites pierres concassées sont concassés par un concasseur à mâchoires (5),
- une deuxième étape de concassage au cours de laquelle les blocs de béton concassés (11) récupérés de la première étape de concassage sont concassés par un concasseur à plateaux (7) comprenant un garnissage ou plateau supérieur fixe (71) et un garnissage ou plateau inférieur (72), ce dernier étant repoussé vers le haut, et au cours de laquelle la durée de séjour des blocs de béton concassés (11) à l'intérieur dudit concasseur à plateaux (7), est réglée de telle façon que le mortier collé aux pierres concassées puisse en être séparé complètement, sans avoir à concasser lesdites pierres concassées à une granulométrie plus faible que souhaitée;
- une troisième étape au cours de laquelle on tamise le mélange récupéré de la deuxième étape de concassage.

2. Le procédé selon la revendication 1, dans lequel un produit abrasif (17) récupéré au cours de la deuxième étape de concassage est introduit dans le concasseur à plateaux (7) au cours de la deuxième étape de concassage.

3. Le procédé selon la revendication 1 ou 2, dans lequel la durée de séjour des particules concassées dans le concasseur à plateaux (7) est réglée par réglage de la largeur de la sortie (73) du concasseur à plateaux (7).

4. Le procédé selon l'une quelconque des revendications 1 à 3, dans lequel le concasseur à plateaux (7) utilisé au cours de la deuxième étape de concassage comporte une pluralité de concasseur à plateaux permettant de réaliser le concassage en plusieurs étages.
